# EUROPÄISCHE PATENTSCHRIFT

(11) **EP 0 926 376 B1**
(45) Veröffentlichungstag und Bekanntmachung des Hinweises auf die Patenterteilung: **23.04.2003**
(21) Anmeldenummer: 98113645.0
(22) Anmeldetag: 22.07.1998
(51) Int. Cl.: F16D 25/08

(54) **Kupplung mit einer Ausrückvorrichtung**
Clutch with release mechanism
Embrayage avec dispositif de débrayage

(30) Priorität: 24.12.1997 DE 19757909
(43) Veröffentlichungstag der Anmeldung: 30.06.1999
(73) Patentinhaber: Carl Freudenberg KG, 69469 Weinheim (DE)
(72) Erfinder: Eckel, Hans-Gerd, Dr., 69514 Laudenbach (DE); Kunkel, Anja, 69483 Siedelsbrunn (DE)

(56) Entgegenhaltungen:
- EP-A- 0 200 410
- GB-A- 2 098 697
- US-A- 2 345 860
- US-A- 5 303 806

## Beschreibung

### Technisches Gebiet

Die vorliegende Erfindung betrifft eine Kupplung gemäß Oberbegriff von Anspruch 1.

Eine Kupplung mit einer Ausrückvorrichtung gemäß der Erfindung umfasst ein Ausrücklager mit einem Verbindungsteil zu einer Druckplatte einerseits und einem hydraulischen Zentralausrücker andererseits. Derartige Ausrückvorrichtungen dienen zum Verschieben einer auf einen Kupplungsreibbelag einwirkenden Druckplatte entlang der Kupplungsachse gegen eine Federkraft. Hierdurch löst sich die reibschlüssige Verbindung der Kupplung und ermöglicht den Anfahr- und Schaltvorgang.

### Stand der Technik

Bekannt sind hydraulische Zentralausrücker, welche eine über ein Widerlager gelagerte Membranfeder zur Kupplung hin drücken. Die Membranfeder besteht aus einem Hebelteil und einem Federteil, die im Bereich des Widerlagers aneinandergrenzen.

Ein Nachteil dieser bekannten Ausführung ist das relativ große Bauvolumen in axialer Richtung, da der Arbeitshub des Zentralausrückers die Nachgiebigkeit der Membranfeder auf der einen und den Lüfthub sowie den Belagverschleiß und die Belagfederung multipliziert mit dem Übersetzungsverhältnis des Hebelteils, das ungefähr 4:1 beträgt, auf der anderen Seite abdecken muß.

Aus der US 5,303,806 ist eine Kupplung mit einem hydraulisch betätigten Zentralausrücker bekannt, der eine Druckplatte gegen eine radial außenliegend angeordnete Kupplungsfeder verstellt. Die Druckplatte ist über ein Kugellager mit dem Zentralausrücker verbunden, wobei das Kugellager an seinem äußeren Laufring einen Zugmechanismus in Form eines Anschlags für einen Vorsprung der Druckplatte aufweist.

Aus der GB-A-2 098 697 ist eine hydraulisch betätigte Kupplung bekannt, die einen hydraulisch betätigten Zentralausrücker mit einem auf eine Kupplungsfeder einwirkenden Zugmechanismus aufweist. Der Zugmechanismus umfasst ein äußeres Lagerteil und ein inneres Lagerteil, zwischen welchen Wälzkörper angeordnet sind. Das innere Lagerteil ist mit dem Hydraulikzylinder über ein Verbindungsmittel formschlüssig verbunden. In einem ersten Ausführungsbeispiel besteht die Verbindung aus einer in Nuten eingreifende Federklammer, in einem zweiten Ausführungsbeispiel ist ein biege- und zugsteifer, schwenkbarer Hebel gezeigt, der über einen verstellbaren Außenring verriegelt wird. Zum Lösen der Verbindung zwischen innerem Lagerteil und Hydraulikzylinder wird zum einen die Klammer entfernt, zum anderen wird der Sicherungsring entlang des Hebels verschoben, wodurch sich der Hebel verschwenkt und das innere Lagerteil freigibt.

### Darstellung der Erfindung

Der vorliegenden Erfindung liegt die Aufgabe zugrunde, eine Kupplung der eingangs genannten Art dahingehend weiterzuentwickeln, dass die Demontage von Motor und Getriebe besonders einfach erfolgen kann. Diese Aufgabe wird durch die in Anspruch 1 wiedergegebenen Merkmale gelöst. Vorteilhafte Ausgestaltungen sind in den Unteransprüchen angegeben.

Gemäß der Erfindung umfasst der Zentralausrücker einen Zugmechanismus und einen Hydraulikzylinder zur Betätigung des Zugmechanismus.
Die Umkehr vom drückenden zum ziehenden Ausrücker erlaubt das Weglassen des übersetzenden Hebelteils und dessen Widerlagers. Die Funktionsreduzierung der Membranfeder auf das Federteil veringert den erforderlichen Bauraum.

Der Zugmechanismus umfasst ein äußeres Lagerteil und ein inneres Lagerteil und zwischen den Lagerteilen angeordnete Wälzkörper. Dadurch wird die Übertragung der zum Lösen der Kupplung erforderlichen Zugkraft vom Hydraulikzylinder auf die Druckplatte bei drehender Kupplung und feststehendem Hydraulikzylinder möglich.

Ist das innere Lagerteil mit dem Hydraulikzylinder über Verbindungsmittel in Zugrichtung formschlüssig und in Druckrichtung lösbar verbunden, so kann die Demontage von Motor und Getriebe in bekannter Weise erfolgen.

Vorteilhafterweise sind die Verbindungsmittel am Hydraulikzylinder befestigte Zungen. Die Zungen haben den Vorteil, dass sie biegeweich sind und somit das Lösen mit kleiner radialer Kraft erlauben. Grundsätzlich sind als Verbindungsmittel auch drehbar angelenkte, biegesteife Hebel mit einem Hakenteil vorstellbar, die durch eine Federkraft mit Vorspannung die Verbindung bewirken.

Vorteilhafterweise weist ein freies Ende der Zunge eine radial nach außen umgebogene, von der Kupplung weg weisende Hinterschneidung und das innere Lagerteil eine radial nach innen vorspringende, der Kupplung zugerichtete Einstülpung auf. Die Hinterschneidung greift zum Lösen der Kupplung in die Einstülpung und stellt einen Formschluss her.

Um die einfache Demontage von Motor und Getriebe zu ermöglichen, ist die Zunge in radialer Richtung bewegbar, wobei ein freies Ende der Zunge eine radial nach innen abgewinkelte Schräge aufweist und an dem Hydraulikzylinder ein schräger Anschlag zur radialen Führung der Schräge nach innen angebracht ist.

Vorteilhafterweise ist ein einfach wirkender Hydraulikzylinder zu verwenden, wobei im Kolbenraum eine Druckfeder vorgesehen ist. Die Druckfeder sorgt für die definierte Anlage der Zunge an der Einstülpung und definierter Vorlast auch bei drucklosem Hydraulikzylinder.

Zum einfachen Lösen der Zugvorrichtung ist der Anschluß des Hydraulikzylinders zur Erzeugung eines Unterdrucks in dem Kolbenraum mit einer Quelle für Unterdruck zu verbinden, wodurch der Kolben gegen die Federkraft verschoben werden kann.

Gemäß der Erfindung ist die Kupplungsfeder vom Zugmechanismus getrennt und zu diesem radial außenliegend angeordnet.

### Kurzbeschreibung der Zeichnung

Eine Ausrückvorrichtung gemäß der Erfindung ist in der Zeichnung dargestellt. Es zeigt die
- Fig. 1: einen Schnitt durch eine gespannte Kupplung, die
- Fig. 2: eine Draufsicht auf eine Zunge, die
- Fig. 3: einen Schnitt in einer gedrehten Schnittebene durch eine Ausrückvorrichtung einer geöffneten Kupplung und die
- Fig. 4: einen Schnitt durch eine weitere gespannte Kupplung.
- Fig. 5: ein weiteres Ausführungsbeispiel mit einem starren Hebel.

### Ausführung der Erfindung

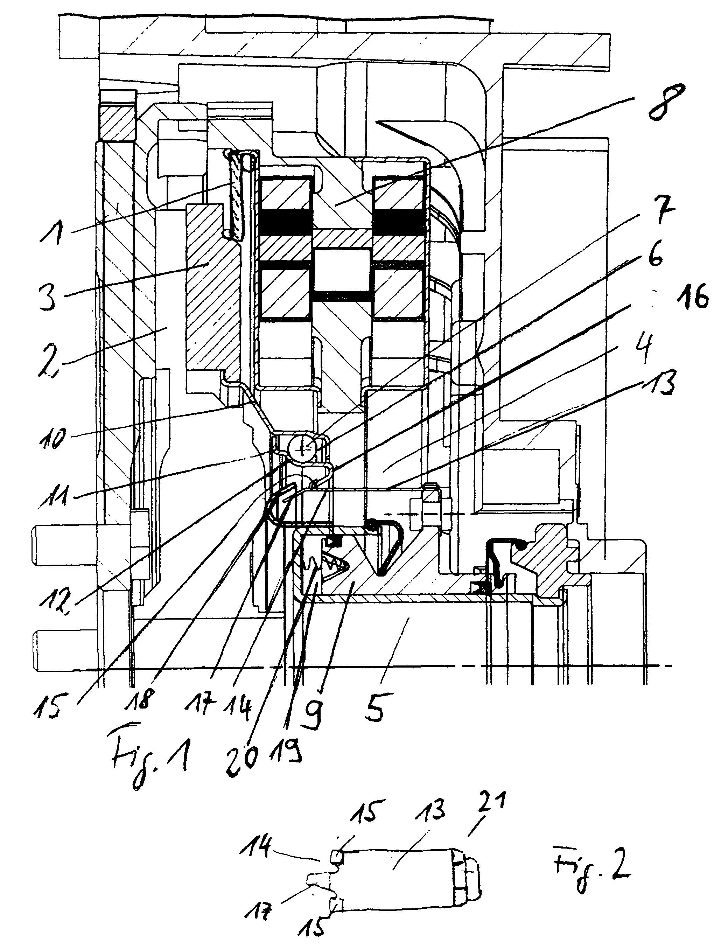

Fig. 1 zeigt eine Kupplung mit Ausrückvorrichtung. Die gespannte Kupplung weist eine von einer Kupplungsfeder 1 gegen einen nur schematisch dargestellten Reibbelag 2 gedrückte Druckplatte 3 auf. Um die Kupplung zu lösen, ist die Druckplatte 3 mit einem Zugmechanismus 4 verbunden, der wiederum an einem hydraulischen Zentralausrücker 5 befestigt ist. In den Zugmechanismus 4 integriert ist ein Ausrücklager 6 mit Wälzkörpern 7.

Die Kupplungsfeder 1 liegt radial außen auf der Druckplatte 3 auf und stützt sich an einer mit der Kupplung drehfest verbundenen Tilgemabe 8 ab. Da die Kupplungsfeder 1 radial außen liegt weist sie einen großen Umfang auf und kann daher in ihrer Federstärke dem Einsatzzweck optimal angepaßt werden.

Der Zentralausrücker 5 umfaßt einen Hydraulikzylinder 9 ringförmigen Aufbaus zur axialen Verschiebung des Zugmechanismus 4, wodurch wiederum die Druckplatte 3 zum Lösen der Kupplung gegen die Kupplungsfeder 1 in axialer Richtung gezogen wird.

Der Zugmechanismus 4 umfaßt ein äußeres Lagerteil 10, das mit der Druckplatte 3 verbunden ist und ein inneres Lagerteil 11, das mit dem Zentralausrücker 5 verbunden ist. Zwischen den Lagerteilen 10,11 sind die Wälzkörper 7 des Ausrücklagers 6 angeordnet. Das Ausrücklager 6 ist dabei so zu dimensionieren, daß die gegenüber herkömmlichen Zentralausrückem erhöhten Kräfte aufgenommen werden können.

Das Ausrücklager 6 ist als Schulterkugellager mit den beiden Lagerteilen 10,11 ausgeführt. Zur Führung der Wälzkörper 7 sind die Lagerteile 10,11 mit einer Rollbahn 12 versehen, die durch eine kleine Hinterdrehung eine Kraftübertragung auch entgegen der bevorzugten Druckrichtung erlaubt. Weiterhin wirken diese Hinterschneidungen wie eine Schnappverbindung und vermeiden ein unbeabsichtigtes Lösen des Lagers während der Handhabung bei der Montage.

Durch diese Anordnung läßt sich in Zugrichtung von der Druckplatte 3 weg ein Kraftschluß über das Ausrücklager 6 übertragen. Das innere Lagerteil 11 ist dazu mit dem Hydraulikzylinder 9 über Verbindungsmittel 13 in Zugrichtung kraftschlüssig verbunden.

Wird hingegen das Auslücklager 6 zur Druckplatte 3 hin verschoben, so kann der Wälzkörper 7 wegen der geringen Hinterschneidungen die Rollbahn 12 nicht verlassen.

Als Verbindungsmittel 13 werden am Hydraulikzylinder 9 befestigte Laschen oder Zungen eingesetzt, deren freies Ende 14 eine radial nach außen umgebogene, von der Druckplatte 3 wegweisende Hinterschneidung 15 aufweist. Wie bereits erwähnt können auch biegesteife Hebel verwendet werden, die gegen eine Federkraft in ihrer Lage gehalten werden.

Das innere Lagerteil 11 weist eine radial nach innen vorspringende, der Druckplatte 3 zugerichtete Einstülpung 16 auf, die mit der Hinterschneidung 15 durch Formschluß zusammenwirkt und eine Verhakung ermöglicht.

Die Zunge 13 ist in radialer Richtung bewegbar und weist ein an ihrem freien Ende 14 eine radial nach innen abgewinkelte Schräge 17 auf. Zur radialen Führung der Schräge 17 nach innen und der entsprechenden Auslenkung der Zunge 13 ist an dem Hydraulikzylinder 9 ein schräger Anschlag 18 angebracht.

Der Hydraulikzylinder 9 wirkt einfach, das heißt, daß er nur einen Kolbenraum 19 umfaßt. Bei Beaufschlagung des Kolbenraums 19 mit unter erhöhtem Druck stehender Hydraulikflüssigkeit wird der Hydraulikzylinder 9 von der Druckplatte 3 weg bewegt und öffnet dabei die Kupplung entgegen der Schließkraft der Kupplungsfeder 1. Um bei unbetätigter Kupplung die Wälzkörper 7 des Ausrücklagers 6 definiert in den Rollbahnen 12 zu halten, sind im Kolbenraum 19 mindestens eine, bevorzugt drei um 120° versetzt angeordnete Druckfedem 20 vorgesehen.

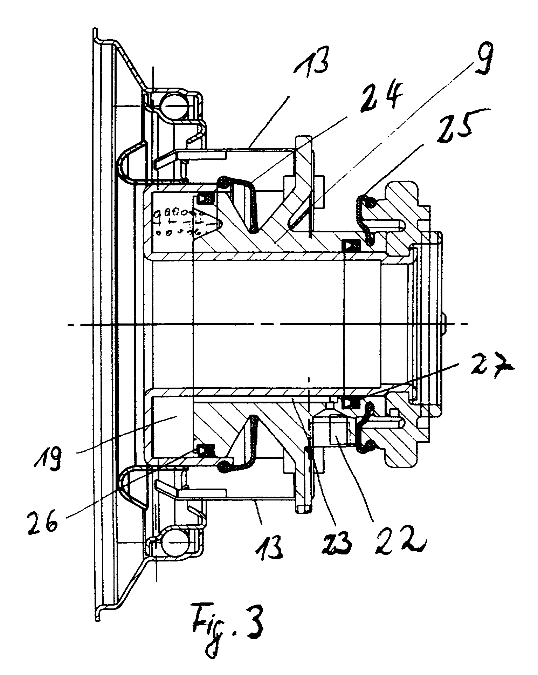

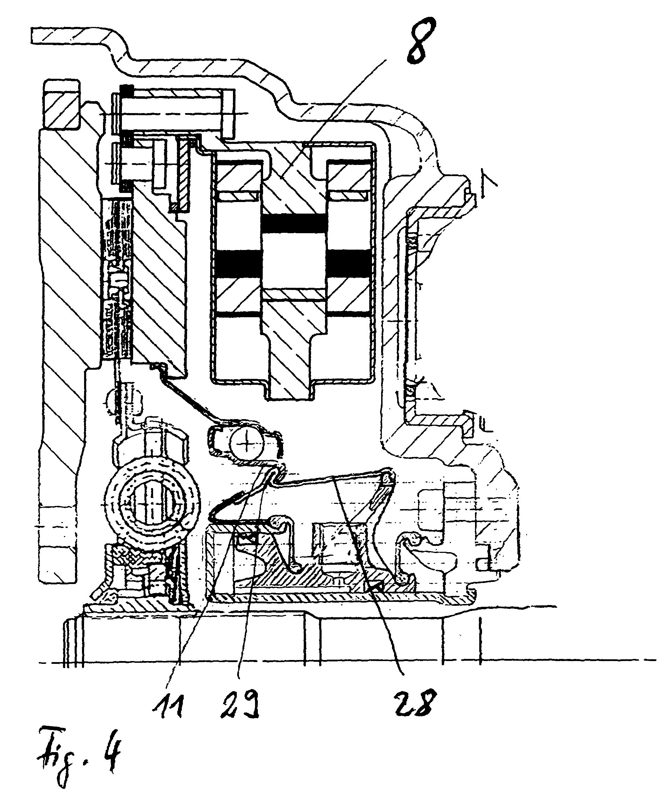

Wird in dem Kolbenraum 19 ein Unterdruck angelegt, so wird der Hydraulikzylinder 9 zur Druckplatte 3 hin verschoben und die Zunge 13 wird durch das Ineinandergleiten der Schräge 17 in den Anschlag 18 soweit ausgelenkt, daß der Formschluß der Hinterschneidung 15 mit der Einstülpung 16 gelöst wird und eine Demontage von Motor und Getriebe möglich ist. Zur Erzeugung eines Unterdrucks in dem Kolbenraum 19 ist ein in Fig. 3 dargestellter Anschluß 22 an dem Hydraulikzylinder 9 zur Einleitung von unter verringertem Druck stehender Hydraulikflüssigkeit vorgesehen.

Unabhängig davon ist durch eine nicht dargestellte Öffnung in der Getriebeglocke das mechanische Bewegen des Kolbens der Hydraulikzylinders in Richtung Motor zum Lösen der formschlüssigen Verbindung vorgesehen.

In Fig. 2 ist die Zunge 13 in Draufsicht gezeigt. Die Zunge besteht aus einem schmalen Band, das an einem Ende 21 eingespannt ist. Das anderen Ende 14 ist so bearbeitet, daß eine vorstehende Schräge 17 und zwei Hinterschneidungen 15 entstanden sind. Die Hinterschneidungen 15 wurden durch Umbiegen zu dem Betrachter hin erzeugt, die Schräge wurde durch Abwinkeln vom Betrachter weg erzeugt.

Man erkennt, daß einige über den Umfang verteilt angeordnete Zungen 13 ausreichen, um die Kraftübertragung sicherzustellen.

In Fig. 1 ist der Zentralausrücker 5 in seiner Lage bei geschlossener Kupplung dargestellt, was an dem geringen Kolbenraum 19 festgestellt werden kann.

In Fig. 3 ist der Zentralausrücker bei geöffneter Kupplung dargestellt, erkennbar durch den vergrößerten Kolbenraum 19. Weiterhin ist in Fig. 3 ein Anschluß 22 zur Einleitung von Hydraulikflüssigkeit dargestellt. Die Hydraulikflüssigkeit gelangt über einen Führungskanal 23 in den Kolbenraum 19.

Zur Abdichtung des Hydraulikzylinders 9 gegen Kupplungsabrieb und Staub sind Dichtungen 24,25 vorgesehen, die einer Axialverschiebung folgen und ausgleichen können. Über Dichtungen 26,27 ist der Hydraulikzylinder gegen Austritt von Hydraulikflüssigkeit gesichert.

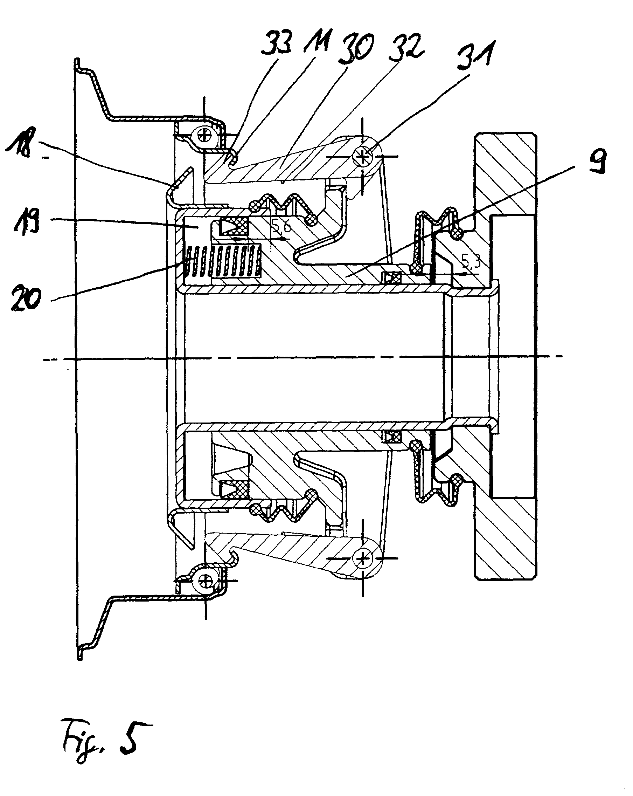

In Fig. 4 ist eine andere Art von Verbindungsmittel gezeigt. Es handelt sich hier um ein gefaltetes Blechteil 28, dessen Falte 29 sich radial nach außen zu dem inneren Lagerteil 11 hin erstreckt.

Eine zusätzliche Ausführungsform ist in Fig. 5 dargestellt, bei der das Verbindungsmittel von einem biegesteifen Hebel 30 gebildet wird, welcher um ein Lager 31 gegen die Kraft einer Feder 32 schwenkbar ist. Der Hebel 30 weist ein hakenförmiges Vorderteil 33 auf, welches mit dem inneren Lagerteil 11 in Eingriff gebracht ist.

Durch Verschieben des Hydraulikzylinders 9 gegen die Kraft der Druckfeder 20 unter Verringerung des Volumens des Kolbenraums 19 wird das Vorderteil 33 gegen einen mit dem Hydraulikzylinder 9 verbundenen Anschlag 18 geführt und durch die aufeinandergleitenden Schrägen gegen die Kraft der Feder 32 zum Hydraulikzylinder 9 hin gedrückt. Dabei löst sich die Verbindung zum inneren Lagerteil 11 und eine Demontage des Hydraulikzylinders ist nun möglich.

### Gewerbliche Anwendbarkeit

Kupplungen gemäß der Erfindung werden überwiegend im Kraftfahrzeugbau eingesetzt.

## Patentansprüche

1. Kupplung mit Ausrückvorrichtung, umfassend ein Ausrücklager (6) mit einem Verbindungsteil (10) zu einer Druckplatte (3) einerseits und einem hydraulischen Zentralausrücker (5) andererseits, weiterhin umfassend eine Kupplungsfeder (1), wobei der Zentralausrücker (5) einen Zugmechanismus (4) und einen Hydraulikzylinder (9) zur Betätigung des Zugmechanismus (4) umfasst, wobei der Zugmechanismus (4) ein äußeres Lagerteil (10) und ein inneres Lagerteil (11) und zwischen den Lagerteilen angeordnete Wälzkörper (7) umfasst, wobei das innere Lagerteil (11) mit dem Hydraulikzylinder (9) über ein Verbindungsmittel in Zugrichtung formschlüssig verbunden ist, **dadurch gekennzeichnet, dass** das innere Lagerteil (11) mit dem Hydraulikzylinder (9) über das Verbindungsmittel in Druckrichtung lösbar verbunden ist, dass das Verbindungsmittel (13; 28; 30) durch am Hydraulikzylinder (9) befestigte, in radialer Richtung bewegbar biegeweiche, zugsteife Zungen (13; 28) oder biege- und zugsteife, schwenkbare Hebel (30) gebildet ist, dass ein freies Ende des Verbindungsmittels (13; 28; 30) eine radial nach innen abgewinkelte Schräge (17) aufweist und an dem Hydraulikzylinder (9) ein schräger Anschlag (18) zur radialen Führung der Schräge (17) nach innen angebracht ist und dass die Kupplungsfeder (1) vom Zugmechanismus (4) getrennt und zu diesem radial außenliegend angeordnet ist.

2. Kupplung nach Anspruch 1, **dadurch gekennzeichnet, daß** ein freies Ende (14) des Verbindungsmittels (13; 28; 30) eine radial nach außen umgebogene, von der Kupplung weg weisende Hinterschneidung (15) aufweist und dass das innere Lagerteil (11) eine radial nach innen vorspringende, der Kupplung zugerichtete Einstülpung (16) aufweist.

3. Kupplung nach einem der Ansprüche 1 bis 2, **dadurch gekennzeichnet, dass** der Hydraulikzylinder (9) einfach wirkt, wobei im Kolbenraum (19) eine Druckfeder (20) vorgesehen ist.

4. Kupplung nach Anspruch 3, **dadurch gekennzeichnet, dass** der Anschluss (22) des Hydraulikzylinders (9) zur Erzeugung eines Unterdrucks in dem Kolbenraum (19) mit einer Quelle für Unterdruck verbindbar ist.

## Claims

1. A clutch with release device, comprising a release bearing (6) having a connecting part (10) to a pressure plate (3) at one end and a hydraulic central releasing device (5) at the other, further comprising a clutch spring (1), the central releasing device (5) comprising a pulling mechanism (4) and a hydraulic cylinder (9) for actuating the pulling mechanism (4), the pulling mechanism (4) having an outer bearing part (10), an inner bearing part (11) and a roll body (7) arranged between the bearing parts, the inner bearing part (11) being connected in the pulling direction in a positively locking fashion to the hydraulic cylinder (9) using a connecting means, **characterized in that** the inner bearing part (11) is releasably connected in the pressing direction to the hydraulic cylinder (9) via the connecting means, **in that** the connecting means (13; 28; 30) is formed by tongues (13; 28) which are fastened to the hydraulic cylinder (9) and are flexurally soft, torsionally stiff and can be moved in a radial direction, or by flexurally and torsionally stiff pivotable levers (30), **in that** one free end of the connecting means (13; 28; 30) has an oblique surface (17) which is angled radially inwards and there is an angled stop (18) on the hydraulic cylinder (9) for radial guidance of the oblique surface (17) in the inward direction, and **in that** the clutch spring (1) is separated from the pulling mechanism (4) and is arranged in a radially outward-lying position with regard to the latter.

2. A clutch according to claim 1, **characterized in that** one free end (14) of the connecting means (13; 28; 30) has an undercut (15) which is bent over in an outward radial direction facing away from the clutch, and that the inner bearing part (11) has a portion (16) which is folded in and protrudes radially inwards in the direction towards the clutch.

3. A clutch according to one of claims 1 and 2, **characterized in that** the hydraulic cylinder (9) is single-acting, one pressure spring (20) being provided in the piston chamber (19).

4. A clutch according to claim 3, **characterized in that** the connection (22) of the hydraulic cylinder (9) can be connected to a vacuum source for generating a vacuum in the piston space (19).

## Revendications

1. Embrayage avec dispositif de débrayage, comprenant une butée (6) avec un élément de liaison (10) menant à un plateau de pression (3) d'une part, et un dispositif de débrayage central (5) hydraulique d'autre part, comprenant, en outre, un ressort d'embrayage (1), le dispositif de débrayage central (5) comprenant un mécanisme de traction (4) et un cylindre hydraulique (9) pour l'actionnement du mécanisme de traction (4), le mécanisme de traction (4) comprenant un élément de support extérieur (10) et un élément de support intérieur (11) ainsi que des corps cylindriques (7) situés entre les éléments de support, l'élément de support intérieur (11) étant relié au cylindre hydraulique (9) par conjugaison de forme, dans le sens de la traction, par le biais d'un moyen de liaison, **caractérisé en ce que** l'élément de support intérieur (11) est relié au cylindre hydraulique (9) de manière détachable dans le sens de la pression par le biais du moyen de liaison, **en ce que** le moyen de liaison (13 ; 28 ; 30) est formé par des languettes (13 ; 28) molles flexibles permettant une mobilité dans le sens radial et résistant à la traction, ou par des leviers (30) pivotants résistant à la flexion et à la traction, languettes ou leviers qui sont fixés sur le cylindre hydraulique (9), **en ce qu'**une extrémité libre du moyen de liaison (13 ; 28 ; 30) est pourvue d'un biseau (17) plié radialement vers l'intérieur et le cylindre hydraulique (9) est pourvu d'une butée inclinée (18) permettant le guidage radial du biseau (17) vers l'intérieur, et **en ce que** le ressort d'embrayage (1) est séparé du mécanisme de traction (4) et est situé à l'extérieur de celui-ci dans le sens radial.

2. Embrayage selon la revendication 1, **caractérisé en ce qu'**une extrémité libre (14) du moyen de liaison (13 ; 28 ; 30) est pourvue d'une contre-dépouille (15) pliée vers l'extérieur dans le sens radial et s'éloignant de l'embrayage et **en ce que** l'élément de support intérieur (11) est pourvu d'une partie emboutie par retournement (16) saillant radialement vers l'intérieur et dirigée vers l'embrayage.

3. Embrayage selon l'une des revendications 1 à 2, **caractérisé en ce que** le cylindre hydraulique (9) a une action simple, un ressort de pression (20) étant prévu dans le compartiment de piston (19).

4. Embrayage selon la revendication 3, **caractérisé en ce que** le raccord (22) du cylindre hydraulique (9) en vue de produire une dépression dans le compartiment de piston (19) peut être relié à une source de vide.
